Europäisches Patentamt

European Patent Office

Office européen des brevets

(19)

(11) Publication number: **0 257 689 B1**

# EUROPEAN PATENT SPECIFICATION

(45) Date of publication of patent specification: **06.11.91** (51) Int. Cl.⁵: **G01M 3/26**, G01F 15/08

(21) Application number: **87201514.4**

(22) Date of filing: **10.08.87**

(54) Instrument to measure leakage of steam from a steam trap.

(30) Priority: **11.08.86 JP 188847/86**
**24.10.86 JP 254455/86**

(43) Date of publication of application:
**02.03.88 Bulletin 88/09**

(45) Publication of the grant of the patent:
**06.11.91 Bulletin 91/45**

(84) Designated Contracting States:
**DE FR GB IT NL SE**

(56) References cited:
**WO-A-81/02203**
**US-A- 4 468 962**

**PATENT ABSTRACTS OF JAPAN, vol. 8, no.
58, 16th March, 1984 (P-261)(1495); & JP - A -
58 206 927 (TLV K.K.) 02-12-1983**

(73) Proprietor: **T L V Co., Ltd.**
**881 Nagasuna Noguchi-cho**
**Kakogawa-shi Hyogo 675(JP)**

(72) Inventor: **Yumoto, Hideaki**
**232-8 Mizonokuchi Kakogawa-cho**
**Kakogawa-shi Hyogo(JP)**
Inventor: **Yonemura, Masao**
**2247 Shimizu Uozumi-cho**
**Akashi-shi Hyogo 674(JP)**
Inventor: **Yamada, Yoshito**
**2-80 Kitayama Inami-cho**
**Kako-gun Hyogo 675-11(JP)**

(74) Representative: **Smulders, Theodorus A.H.J.,
Ir. et al**
**Vereenigde Octrooibureaux Nieuwe Parklaan
107**
**NL-2587 BP 's-Gravenhage(NL)**

## Description

### 1. Field of the invention

The present invention relates to an instrument for measuring leakage of steam from a steam trap and determines the operation status thereof, e.g. detects whether steam is leaking or not, or measures the leakage rate.

### 2. Description of the prior art.

A steam trap is an equipment to be attached to a steam pipe line or to an equipment using steam and that automatically discharges only the condensed water without leaking out steam. Leakage of steam is recently monitored more strictly with increasing fuel cost. No leakage of steam is becoming the prerequisite of adopting a steam trap. After completion of the piping, all steam traps are strictly monitored for steam leakage and those leaking steam are repaired or entirely replaced.

Various leakage measuring instruments for steam traps have so far been developed and are actually used.

One type comprising a through-vision window in the outlet piping of the steam trap enables to visually check the condition of flow inside the pipe. Other types allow to apply a thermometer or a vibration meter to measure the surface temperature of the steam trap or the sound of fluid flow therein. However, they are only able to observe the condition of leakage qualitatively and they are not designed to measure the leakage amount quantitatively. Therefore, the extent of the leakage was determined by human appraisal only.

In PATENT ABSTRACTS OF JAPAN, vol. 8, no. 58 (1984) (page 261)(1495) and JP-A-58 206 927 there is disclosed an instrument for measuring leakage of steam from a steam trap, comprising the features cited in the pre-characterizing clause of claim 1.

In this known instrument between the lowermost edge of the bulkhead and the bottom of the liquid retaining chamber there is defined a liquid passage from the inlet chamber to the outlet chamber. Spaced upward from the lowermost edge of the bulkhead there is an opening. Above this opening an electrode bar is positioned in the outlet chamber. The flow rate of steam passing the instrument is calculated from the number of bubbles rising out of this opening and enshrouding the electrode. Corrections are made for steam pressure changes detected by a pressure sensor in the inlet chamber.

### SUMMARY OF THE INVENTION

The object of the invention is, therefore, to provide an instrument which accurately determines the quantity of steam leakage and which is not affected by the flow-in of condensed water and by change in its quantity.

According to the present invention the instrument has the features mentioned in the characterizing part of claim 1.

A port for passage of steam may be formed in the partition on a higher level than the water level at the maximum flow rate of the liquid.

The functioning of the foregoing technical means is as follows;

The inlet port and the outlet port are connected to the steam feed side and steam trap side respectively. While the steam trap is operating normally, the water levels in the inlet side space, in the outlet chamber and in the measuring chamber are the same. When steam leaks from the steam trap, steam in an amount corresponding to the leakage amount flows from the inlet to the outlet passing along the lower end of the partition and through the opening formed in the bulkhead, and the water level of the measuring chamber is lowered. This water level reduction is detected by water level detecting means such as an electrode or a float. From the interrelation between the water level and the gas volume passing through the opening in the bulkhead, a flow rate computing indicator, calculates and indicates the steam leakage quantity.

The interrelation between the water level on the upstream side of the bulkhead and the steam quantity passing through the opening in the bulkhead can be experimentically ascertained, taking into account water level reductions due to extra steam supply for compensation of pressure losses following condensation as a result of heat radiation in the piping downstream of the instrument.

When the load at the upstream steam generating means changes and/or steam is consumed downstream of the steam trap the forming of condensate will vary.

In case the forming of condensate increases due to upstream load variations the inflow of condensate into the instrument increases and the water level in the inlet side space, in the measuring chamber and in the outlet side space will rise equally.

When the condensed water flow into the inlet port increases due to downstream steam consumption or due to substantial leakage at the steam trap, the water levels the inlet chamber and the outlet chamber will rise, however, the water level in the measuring chamber is lowered because of the substantial amount of steam forcing its way along the lower edge of the partition and through the opening in the bulkhead. If however, there is no downstream steam consumption and there is a small leakage at the steam trap, a corresponding extra amount of steam passes through the instrument, into the inlet side space, through the gas passage in the partition and through the opening in the bulkhead and out of the outlet port. The water levels in the inlet side space and in the outlet side space rise and the water level in the measuring chamber is lowered in an accurately measureable amount. Further the water surface of the inlet space ripples by the condensed water flowing in from the inlet, however, the water surface within the measuring chamber does not ripple because this chamber is separated from the inlet space by a partition.

This passage for gas should therefore be formed on a higher level than the water level of in the measuring chamber at maximum water flow rate. When the leakage of steam is small, steam flows into the measuring chamber only through the passage for gas and not along the underside of the partition and the measuring chamber is kept separated from the inlet space by the partition, and the water level in the measuring chamber does not ripple. When the steam leakage increases, steam also flows into the measuring chamber along the under side of the partition, however, this also does not effect the measuring accuracy largely because the steam leakage is large.

The present invention provides the following specific effect.

The water level in the measuring chamber does not change with the change of the quantity of in-flowing condensed water, and the smooth water surface in the measuring chamber is not affected by in-flowing condensed water and an accurate measurement of steam leakage can be performed.

The above and other objects, features and advantages of the present invention will become apparent from the following description of an exemplary embodiment of the measuring instrument and from the appended claims, taken in conjunction with the accompanying drawings.

BRIEF DESCRIPTION OF THE DRAWINGS

Fig. l is the sectional view of an instrument for measuring leakage of steam from a steam trap;
Fig. 2 is a sectional view along II-II in Fig. l and
Fig. 3 is a sectional view along III-III in Fig. l

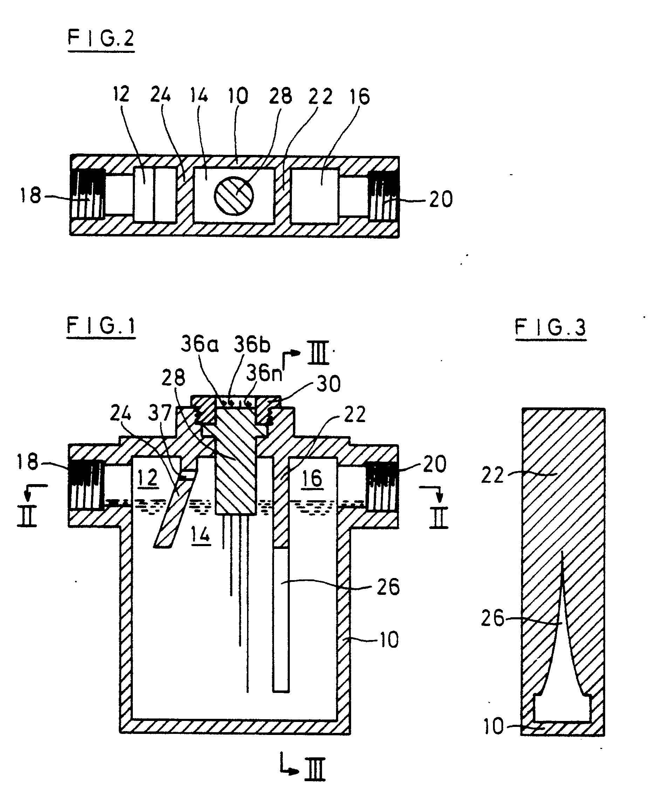

DESCRIPTION OF THE PREFERRED EMBODIMENTS

An exemplary embodiment indicating the aforementioned technical means is explained (refer to Fig. l --- Fig. 3).

A casing l0 forms a liquid retaining chamber (l2, l4, l6) and an inlet port l8 and an outlet port 20 open into the upper part of the retaining chamber.

The casing l0 shall have sufficient strength to bear the internal liquid pressure.

A bulkhead 22 and a partition 24 extend from the top into the liquid retaining chamber. The bulkhead 22 and the partition 24 separate within the liquid retaining chamber an inlet side space l2 connected to the inlet port l8, a measuring chamber l4 and an outlet chamber l6 connected to the outlet port 20.

The inlet side space l2 and the measuring chamber l4 are interconnected at the lower side of the partition 24 and by a passage for gas 37 provided in the partition 24 for passing through gasses, and the measuring chamber l4 and the outlet chamber l6 are interconnected through an opening 26 formed in the lower part of the bulkhead 22.

The lower end of the partition 24 and the upper end of the opening 26 formed in the bulkhead 22 are located on a lower level than the openings of the inlet port l8 and of the outlet port 20.

The passage for gas 37 extending through the partition 24 is located on a higher level than the water level at the maximum flow rate of the liquid.

A plurality of electrodes 36a, 36b, ---36n having different heights are attached to an attaching member 28. The attaching member 28 is formed of insulation material, and is attached to the casing l0 with a fixing member 30. The water level in the measuring chamber l6 can be measured with the electrodes 36a, 36b, --- 36n. The electrodes 36a, 36b, --- 36n are connected to a computing indicator (not indicated in the figures), which calculates the quantity of steam leakage from the interrelation between the water level and the volume of gas passing the opening 26.

The inlet port l8 and the outlet port 20 are connected to a steam feeding means and to the steam trap. If the steam trap is operating normally (without leakage of steam and discharging only condensed water), the water levels in the inlet chamber l2, in the outlet chamber l4 and in the measuring chamber l6 are identical as shown in Fig. l. In the piping between the outlet port 20 and the steam trap some condensation occurs due to heat radiation. The pressure drop due to this condensation is compensated by extra steam supply through inlet port l8 in the same amount as condensated, flows through opening 37 or along lower edge of partition 24 into chamber l4. When the steam trap opens to discharge condensed water, the same quantity thereof passes through opening 26. This does not affect the equal level situation in l2, l4 and l6 as depicted in fig. l. If however steam leakage occurs at the steam trap the exit side pressure at 20 reduces largely and a substantial quantity of steam, corresponding to the steam leakage, flows from the inlet port l8 along the under side of the partition 24 and the opening 26, towards the outlet port 20, and the water level in the measuring chamber l6 lowers. This lowering of the water level is detected by the electrodes 36a, 36b, --- 36n. From the water level value sensed by the electrodes 36a, 36b, --- 36n, the amount of steam leakage is calculated and indicated by the computing indicator. In case of a small leakage at the steam trap the small amount of compensating steam flows from the inlet port l8 to the measuring chamber l4 only through passage 37. The small lowering of the water level in chamber l4 can be accurately measured.

## Claims

1. An instrument for measuring leakage of steam from a steam trap, comprising a liquid retaining chamber (12, 14, 16) having formed thereon an inlet port (18) to introduce fluid into said chamber and an outlet port (20) to conduct fluid out of said chamber, both ports (18, 20) having their openings in the upper part of the liquid retaining chamber, a bulkhead (22) extending into said liquid retaining chamber (12, 14, 16) such that liquid may pass underneath said bulkhead (22), effectively separating an inlet chamber (12) connected to said inlet port (20) from an outlet chamber (16) connected to said outlet port (20), there being provided an opening (26) in said bulkhead (22) to connect the inlet chamber (12, 14) with the outlet chamber (16) on a level lower than the respective inlet and outlet openings, , characterized by a partition (24) extending into the inlet room (12) down to a lower level than the opening of the inlet port (18) to devide the inlet chamber (12, 14) into an inlet space (12) and a measuring chamber (14), said measuring means (36a, 36b, ---,36n) being provided in the measuring chamber (14) and being designed for measuring the water level in said measuring chamber (14) and said computing means being designed to calculate and indicate the steam leakage quantity from the interrelation between the water level value detected by the water level measuring means (36a, 36b, --- ,36n) and the volume of steam passing through the opening (26) in the bulkhead (22).

2. An instrument according to claim 1, in which a passage (37) to pass steam is formed in the partition (24) on a higher level than the water level at the highest liquid flow rate.

## Revendications

1. Instrument pour mesurer une fuite de vapeur dans un purgeur de vapeur, comprenant une chambre de retenue de liquide (12,14,16) dans laquelle sont formés un orifice d'arrivée (18) pour introduire le fluide dans la chambre et un orifice de sortie (20) pour laisser sortir le fluide de la chambre, ces deux orifices (18,20) ayant leurs ouvertures dans la partie supérieure de la chambre de retenue de liquide, une cloison (22) s'étendant dans la chambre de retenue de liquide (12,14,16), de telle sorte que le liquide peut passer sous cette cloison (22), séparant effectivement une chambre d'arrivée (12) raccordée à l'orifice d'arrivée (18) d'une chambre de sortie (16) raccordée à l'orifice de sortie (20), une ouverture (26) dans la cloison (22) étant prévue pour raccorder la chambre d'arrivée (12,14) à la chambre de sortie (16) à un niveau inférieur à celui des ouvertures respectives d'arrivée et de sortie, caractérisé en ce qu'une séparation (24) s'étend dans la chambre d'arrivée (12) jusqu'à un niveau inférieur à l'ouverture de l'orifice d'arrivée (18) pour diviser la chambre d'arrivée (12,14) en un espace d'arrivée (12) et une chambre de mesure (14), les moyens de mesure (36a,36b,...,36n) étant prévus dans la chambre de mesure (14) et étant conçus pour mesurer le niveau de l'eau dans la chambre de mesure (14) et les moyens de calcul étant conçus pour calculer et indiquer la valeur de la fuite de vapeur à partir de la relation entre la valeur du niveau de l'eau détectée par les moyens de mesure du niveau de l'eau (36a,36b,...,36n) et le volume de vapeur passant à travers l'ouverture (26) dans la cloison (22).

2. Instrument selon la revendication 1, dans lequel un passage (37) destiné à laisser passer la vapeur est formé dans la séparation (24) à un niveau plus élevé que le niveau de l'eau pour le débit de liquide le plus élevé.

## Patentansprüche

1. Gerät zum Feststellen von Lecks an einem Kondensatabscheider mit einer Flüssigkeitsrückhaltekammer (12, 14, 16), die mit einem Flüssigkeitseinlaß (18) und -auslaß (20) versehen ist, deren Öffnungen im oberen Teil der Kammer angeordnet sind, einem in die Rückhaltekammer (12, 14, 16) hineinragenden Wehr (22), das unterhalb einen Flüssigkeitsdurchtritt ermöglicht und eine mit dem Flüssigkeitseinlaß (18) verbundene Einlaßkammer (12) von einer mit der Flüssigkeitsauslaß (20) verbundenen Auslaßkammer (16) trennt und eine Öffnung (26) besitzt, die die Einlaßkammer (12, 14) mit der Auslaßkammer (16) in einer Höhe unter-

halb der Einlaß und der Auslaßöffnung verbindet, gekennzeichnet durch einen in die Einlaßkammer (12) bis herunter zu einer Höhe unterhalb der Einlaßöffnung (18) hineinragenden, die Einlaßkammer (12, 14) in einen Einlaßraum (12) und eine Meßkammer (14) unterteilenden Teiler (24), in der Meßgeräte (36a, 36b.....36n) zum Messen des Wasserstandes in der Meßkammer (14) angeordnet sind, sowie durch einen die Menge des austretenden Dampfs aufgrund des Zusammenhangs zwischen dem jeweiligen, von den Meßgeräten (36a, 36b....36n) festgestellten Wasserstand und der durch die Öffnung (26) in dem Wehr (22) hindurchströmenden Dampfmenge errechnenden und anzeigenden Rechners.

2. Gerät nach Anspruch 1, bei dem sich in dem Teiler (24) ein Dampfdurchlaß (37) in einer Höhe über dem Niveau des Wasserspiegels bei höchster Strömungsrate des Wassers befindet.

EP 0 257 689 B1

FIG.2

12 24 14 10 28 22 16

18

20

FIG.1

36a 36b
36n III
28 30
24 37 22
18 12 16 20
II II
14
26
10
III

FIG.3

22

26

10

6